# EUROPÄISCHE PATENTSCHRIFT

(11) **EP 3 425 117 B1**
(45) Veröffentlichungstag und Bekanntmachung des Hinweises auf die Patenterteilung: **04.12.2019**
(21) Anmeldenummer: 18178725.0
(22) Anmeldetag: 20.06.2018
(51) Int. Cl.: E02B 8/08

(54) **VORRICHTUNG ZUR ERZEUGUNG EINER DOTATIONSSTRÖMUNG FÜR EINE FISCHAUFSTIEGSEINRICHTUNG**
DEVICE FOR PRODUCING A DOTATION FLOW FOR A FISH LADDER
DISPOSITIF DE GÉNÉRATION D'UN ÉCOULEMENT ROTATIONNEL POUR UN DISPOSITIF DE FRANCHISSEMENT PISCICOLE

(30) Priorität: 04.07.2017 DE 102017114833
(43) Veröffentlichungstag der Anmeldung: 09.01.2019
(73) Patentinhaber: Universität Kassel, 34125 Kassel (DE)
(72) Erfinder: Hassinger, Reinhard, 34317 Habichtswald-Ehlen (DE)
(74) Vertreter: Patentanwälte Walther Hinz Bayer PartGmbB

(56) Entgegenhaltungen:
- DE-A1- 10 106 538
- DE-U1- 9 209 785
- DE-U1-202007 013 837

## Beschreibung

Die Erfindung betrifft eine Fischaufstiegseinrichtung, insbesondere im Bereich des Auslasses eines Gerinnes eines Fischpasses mit einer Vorrichtung zur Erzeugung einer Dotationsströmung.

Der Begriff "Dotationsströmung" beschreibt einen Volumenstrom bestimmter Größe, Richtung und Turbulenz, der z. B. dem Gerinne eines Fischpasses zugeführt wird, um im Bereich des Auslasses eine Lockströmung zu erzeugen.

Eine Fischaufstiegseinrichtung kann ein Fischpass, eine Fischschleuse oder ein Fischlift sein.

Ein Fischpass ist eine Vorrichtung, die es Fischen ermöglicht, bei einer Wehreinrichtung mit beispielsweise einem Wasserkraftwerk, vom Unterwasser in das Oberwasser zu gelangen oder umgekehrt. Insbesondere bei einem Wehr mit einem Wasserkraftwerk ist zu beobachten, dass der Wasserstrom zu dem Unterwasser aus dem Wasserkraftwerk ein wesentlich höheren Volumenstrom aufweist, als der Wasserstrom in dem Gerinne, das Teil des Fischpasses ist. Der Grund hierfür liegt im Wesentlichen darin begründet, dass möglichst viel Wasser durch das Wasserkraftwerk geleitet werden soll, um eine möglichst hohe Energieausbeute zu erzielen.

Nun ist allerdings bekannt, dass Fische bei ihren Wanderungen primär von der Strömung geleitet werden, sodass sie immer bestrebt sind, in dem Gewässer aufzusteigen, von dem der größte Strömungsreiz ausgeht. Dies ist, wie bereits ausgeführt, naturgemäß nicht das Gerinne, das als Fischpass dient, sondern vielmehr der Auslauf des Wasserkraftwerkes. Dies hat zur Folge, dass von dem Fischpassauslauf eine deutlich wahrnehmbare Lock- oder Reizströmung ausgehen muss, um für die Fische auffindbar zu sein.

Die Strategie, den gesamten benötigten Wasserstrom durch den Fischpass zu leiten, entfällt in den meisten Fällen und bei vielen Fischpasstypen, weil der Platzbedarf zu groß wird und die Kosten beim Bau überproportional steigen. Das heißt, je weniger Wasser durch den Fischpass geleitet werden muss, umso billiger wird der Fischpass, da er dann kleiner dimensioniert werden kann.

Aus der DE 20 2007 013 837 U1 ist eine Fischaufstiegshilfe mit einer Fischpumpe bekannt. Die Fischpumpe umfasst eine Einzugskehle mit anschließendem Tosboden, wobei in der Eingangskehle ein Wirbelelement zur Erzeugung einer Lockströmung zum Anlocken der Fische vorgesehen ist.

Aus der US 2,683,969 ist eine Vorrichtung zur Erzeugung eines Lockstromes nach Art einer Wasserstrahlpumpe bekannt. Hierbei ist im Gerinne des Fischpasses ein trichterförmiger Einlass vorgesehen, wobei sich an den trichterförmigen Einlass ein rechteckiges Rohr anschließt, wobei das rechteckige Rohr in ein Gehäuse der Wasserstrahlpumpe mündet. In dieses längliche Gehäuse mündet senkrecht zur Längsachse des Gehäuses eine weitere Leitung aus dem Oberwasser, wobei endseitig und zwar in Achsrichtung zu dem rechteckigen Rohr, die Rohrleitung abgeht, die gleichfalls bis in das Oberwasser reicht. Im Übergang von dem rechteckigen Rohr zu dem Gehäuse befindet sich eine radiale Öffnung, durch die Wasser aus dem Unterwasser einströmen kann, da sich dieses Gehäuse im Unterwasser befindet. Zweck der Vorrichtung ist es, im Bereich des trichterförmigen Auslasses eine hohe Strömung zu erzeugen, um dadurch Fische zum Aufstieg zu bewegen. Allerdings ist kaum zu erwarten, dass die Fische den Aufstieg durch die dort dargestellten Rohrleitungen schlussendlich bewerkstelligen können. Dies liegt allein bereits daran, dass die Fische kaum in der Lage sein werden, die Turbulenzen am Austritt zu überwinden. Darüber hinaus ist mehr als fraglich, ob die Fische tatsächlich über mehrere Meter durch geschlossene Rohrleitungen schwimmen.

Aus der EP 1 988 216 B1 ist in diesem Zusammenhang bekannt, vom Unterwasser, z. B. eines Wasserkraftwerkes, zum Auslaufgerinne des Fischpasses eine wasserführende Querverbindung zu schaffen, in der mindestens eine hydraulisch arbeitende Wasserpumpe vorgesehen ist. Eine solche hydraulisch arbeitende Wasserpumpe arbeitet nach dem Prinzip einer Wasserstrahlpumpe. Diese Wasserstrahlpumpe befindet sich in Bezug auf die Höhe unmittelbar unter oder hinter dem Turbinenauslauf, d. h. im Unterwasser des Turbinenauslaufs und zwar im Bereich eines Übergangs vom Unterwasser des Turbinenauslaufs zum Gerinne des Fischpasses. Das heißt, dass durch die hydraulisch arbeitende Wasserpumpe Wasser als Dotationsströmung aus dem Unterwasser in das Gerinne des Fischpasses hineingeleitet wird. Das heißt weiterhin, dass mit einer relativ geringen Wassermenge zum Betrieb der Wasserstrahlpumpe, z. B. durch eine Lockstromleitung aus dem Oberwasser, im Auslaufgerinne, also im Bereich des Fischeinstiegs im Unterwasser, eine verhältnismäßig große Wassermenge bereitgestellt werden kann, die als Lock- oder Leitströmung die Fische dann bewegt, im Fischpass aufzusteigen; dies ohne den Wirkungsgrad des Wasserkraftwerks negativ zu beeinträchtigen.

Aus der DE 10 2010 037 926 A1 ist eine Fischaufstiegseinrichtung mit den Merkmalen des Oberbegriffs des Anspruchs 1 bekannt. Dabei ist die Auffindbarkeit des Gerinneauslaufs einer Fischaufstiegseinrichtung im Unterwassers für Fische dadurch erleichtert, dass sich vor dem Gerinneauslauf ein Bereich mit im Wesentlichen gleichgerichteter Strömung ohne Rückströmungen befindet. So soll den Fischen im Rahmen ihrer physiologischen Leistungsfähigkeit ermöglicht werden, entgegen der Strömungsrichtung zu schwimmen, um in das Gerinne der Fischaufstiegseinrichtung zu gelangen.

Die der Erfindung zugrunde liegende Aufgabe besteht darin, eine Vorrichtung zur Erzeugung einer Dotationsströmung für z. B. ein Gerinne eines Fischpasses im Bereich des Auslasses des Gerinnes eines Fischpasses bereitzustellen, wobei die Vorrichtung einfach und preiswert im Aufbau sein soll, und darüber hinaus zuverlässig dafür sorgt, dass die Fische aufgrund der Lockströmung im Bereich des Auslasses des Gerinnes den Einstieg in das Gerinne des Fischpasses finden.

Zur Lösung der Aufgabe wird eine Fischaufstiegseinrichtung gemäß Anspruch 1 vorgeschlagen. Eine Fischaufstiegseinrichtung kann ein Fischpass, eine Fischschleuse oder ein Fischlift sein.

Nachfolgend wird der einfachheithalber lediglich auf einen Fischpass Bezug genommen. Das aus dem Oberwasser herbeigeleitete oder aus einer gefüllten Fischschleuse abgelassene Wasser, besitzt einen hohen Druck und damit überschüssige hydraulische Energie. Die Aufgabe bei der Erzeugung des Lockstroms besteht deshalb darin, den überschüssigen Druck abzubauen, die hydraulische Energie umzuwandeln, die dabei erzeugten Turbulenzen zu dämpfen und die resultierende Strömung nach Größe und Richtung zu bestimmen, sodass die Dotationsströmung zusammen mit dem Hauptstrom im Gerinne am Auslass des Gerinnes eine effiziente Lockströmung bereitstellt.

Die der Drossel nachgeschaltete Einrichtung zur Verlangsamung und/oder Ausrichtung des Wasserstroms sorgt mit der Drossel dafür, dass im Bereich des Auslasses des Fischpasses, also dem Beginn des Aufstiegs für die Fische, die dort herrschenden Strömungsbedingungen so eingestellt werden können, dass die Lockströmung nicht zu schnell ist und/oder nicht zu turbulent, und im Wesentlichen auch so ausgerichtet ist, dass sie tatsächlich als Lockströmung fungieren kann.

Vorteilhafte Merkmale und Ausgestaltungen der Erfindung ergeben sich aus den Unteransprüchen.

So ist nach einem weiteren Merkmal der Erfindung vorgesehen, dass die Einrichtung zur Verlangsamung und/oder Ausrichtung des Wasserstromes als Bürstenanordnung, insbesondere als Bürstenkranz, ausgebildet ist. Der aus der Wirbeldrossel austretende rotierende und insofern konische Wasserstrom trifft auf den Bürstenkranz, der einerseits für eine Beruhigung des Wasserstroms sorgt, also insbesondere die Turbulenz vermindert. Das heißt, durch die Bürsten bzw. den Bürstenkranz wird die kinetische Energie des aus der Drossel austretenden Wassers vermindert; des Weiteren sorgt der Bürstenkranz für eine Verkleinerung der Wirbel, wobei im weiteren Strömungsverlauf die Wirbel weiter abgebaut werden.

Eine Wirbeldrossel umfasst ein rundes Gehäuse mit einem exzentrischen Einlass für das Wasser und einem zentrischen Auslauf. Bei Zuführung des Wassers in die Wirbeldrossel erhält das Wasser einen entsprechend der runden Form des Gehäuses und der Exzentrizität des Zulaufs ausgerichteten Drall, bevor es dann als Wasserstrom aus dem Auslass mit eben einem solchen Drall austritt. Das heißt, dass der Wasserstrom aus der Auslassöffnung aufgrund des Dralles und Druckes konisch nach außen austritt und hierbei rotiert. Wie bereits ausgeführt, ist der Wirbeldrossel insbesondere ein Bürstenkranz nachgeordnet. Trifft der Wasserstrom, der aus der Drossel ausgetreten ist, auf die Bürsten des Bürstenkranzes, so findet einerseits eine Verlangsamung der Strömung des Wassers und damit eine Verminderung der Turbulenz statt, und andererseits wird der Wasserstrom gerichtet. Das heißt, es findet auch eine Ausrichtung der Strömung statt.

Die Wirbeldrossel weist noch als besonderes Merkmal eine verstellbare Auslassblende auf, um den Volumenstrom beeinflussen zu können, der schließlich dem Gerinne zugeführt wird. Vorteilhaft ist ebenfalls, wenn die Auslassblende austauschbar ist, sodass alle gefragten Durchflüsse realisierbar sind.

Nach einem weiteren Merkmal der Erfindung ist vorgesehen, dass der Einrichtung zur Verlangsamung und/oder Ausrichtung der Strömung beispielsweise ein Bürstenkranz, eine Einrichtung zur Gleichrichtung und gegebenenfalls auch zur Umlenkung bzw. Ausrichtung des Wasserstroms nachgeordnet ist. Diese Einrichtung zur Umlenkung bzw. Ausrichtung des Wasserstroms stellt sich vorteilhaft als ein Gatter mit einer Mehrzahl von parallel zueinander verlaufenden Leitelementen dar.

Allerdings kann durch ein solches Gatter nicht nur die Richtung der Strömung variiert werden, vielmehr erfolgt auch eine weitere Verminderung der Turbulenz. Auch wird durch die Stellung der Leitelemente oder Lamellen die Geschwindigkeit des Wasserstroms beeinflusst werden.

Die Leitelemente sind in einem Gestell gelagert, wobei vorteilhaft die Leitelemente im Gestell in Richtung quer zur Längsachse der Leitelemente verschwenkbar angeordnet sind, um dem Wasserstrom eine bestimmte Richtung zu geben. Insbesondere auch durch das Gatter mit diesen zuvor erwähnten Leitelementen, besteht die Möglichkeit, bei Anordnung der Vorrichtung im Bereich des Auslasses eines Gerinnes eines Fischpasses durch die Richtung der eingeführten Dotationsströmung die Turbulenzbildung und/oder auch die Geschwindigkeit des Wassers im Gerinne, und hier insbesondere im Bereich des Auslasses des Gerinnes zum Unterwasser, zu beeinflussen. Schlussendlich kann durch die Richtung der Dotationsströmung die Hauptfließrichtung des Wasserstroms im Gerinne beeinflusst werden. Das Gatter kann hierbei ein Fischschonrechen sein.

Nach einem weiteren Merkmal der Erfindung ist vorgesehen, dass das Gatter entgegen der Strömungsrichtung des Wasserstroms um einen Winkel von bis zu 180° verschwenkbar ist, um das Gatter von ansitzenden Verschmutzungen zu reinigen.

Vorteilhaft ist hierbei vorgesehen, dass der Wasserstrom für die vorzugsweise in einem Gehäuse angeordnete Vorrichtung zur Erzeugung einer Dotationsströmung dem Oberwasser entnommen wird. Durch die Wirbeldrossel wird dem Wasserstrom Energie entzogen. Allerdings verlässt der Wasserstrom die Drossel mit einem Drall. Um den Drall zu eliminieren, ist der Wirbeldrossel die Einrichtung zur Verlangsamung und/oder Ausrichtung des Wasserstroms nachgeschaltet. Diese Einrichtung stellt sich insbesondere als Bürstenanordnung, und hier insbesondere eine als Bürstenkranz ausgebildete Bürstenanordnung dar.

Der Bürstenanordnung nachgeschaltet ist die Einrichtung zur Umlenkung oder Ausrichtung des Wasserstroms, insbesondere in Form eines Fischschonrechens. Durch solch einen Fischschonrechen wird die Strömung im Gerinne des Fischpasses schlussendlich so beeinflusst, dass sie als Lockströmung die Fische zum Einstieg in das Gerinne veranlasst.

Anhand der Zeichnungen wird die Erfindung nachstehend beispielhaft näher erläutert.

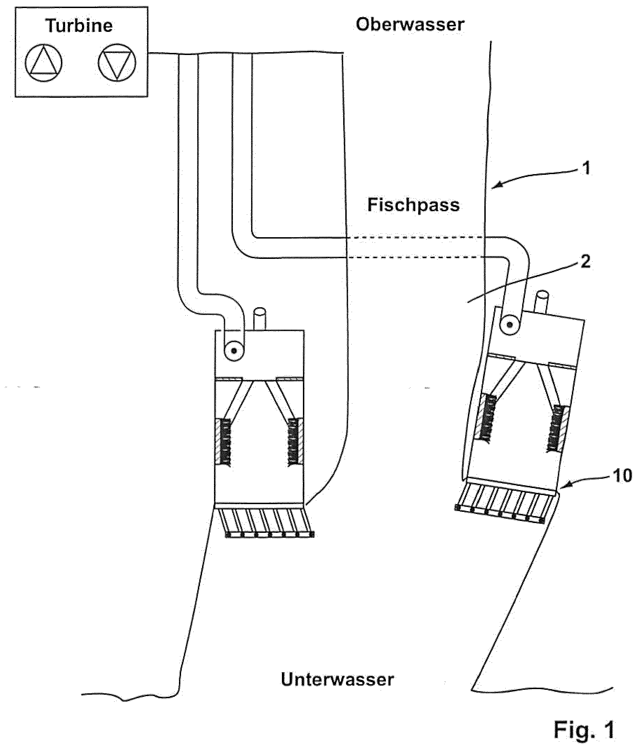

- Fig. 1: zeigt schematisch einen Fischpass;
- Fig. 2: zeigt ebenfalls schematisch die Vorrichtung zur Erzeugung einer Dotationsströmung, angeordnet in einem Gehäuse.

Der insgesamt mit 1 bezeichnete Fischpass umfasst das Gerinne 2 des Fischpasses, das zwischen dem Oberwasser und dem Unterwasser beispielsweise einer Staustufe, z.B. einem Wehr, angeordnet ist. Im Bereich des Auslaufes des Gerinnes des Fischpasses zum Unterwasser finden sich zwei der erfindungsgemäßen Vorrichtungen 10, angeordnet am Gerinne des Fischpasses. Mit Hilfe der Vorrichtung 10 wird eine Dotationsströmung mit bestimmten Eigenschaften hinsichtlich Strömungsgeschwindigkeit, Turbulenz und Richtung erzeugt, die dem Hauptstrom im Gerinne zugegeben wird. Dies im Bereich des Auslasses des Gerinnes, sodass sich dort eine Lockströmung für die Fische ergibt.

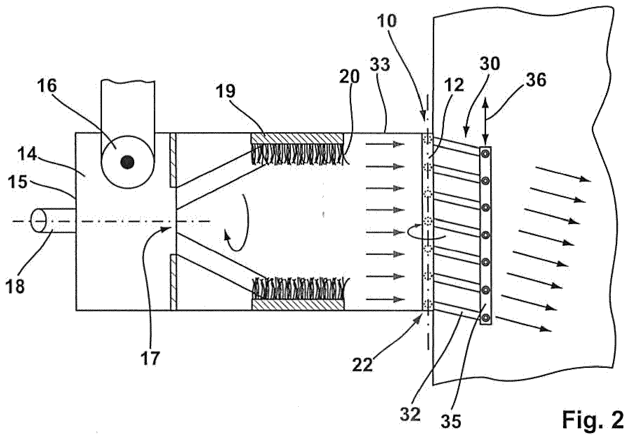

Die in Fig. 2 dargestellte Vorrichtung 10 zur Erzeugung einer Dotationsströmung umfasst das Gehäuse 12, wobei das Gehäuse 12 die insgesamt mit 14 bezeichnete Wirbeldrossel aufnimmt, wobei die Wirbeldrossel 14 ein Gehäuse mit einem exzentrischen Einlass 16 aufweist. Im Gehäuse der Wirbeldrossel 14 befindet sich darüber hinaus ein zentrischer, insbesondere als verstellbare Blende ausgebildeter Auslass 17, sowie eine Luftzuführung 18, um das durch die Wirbeldrossel geführte Wasser zu belüften.

Im Gehäuse 12 der Vorrichtung der Wirbeldrossel 14 nachgeordnet ist die Einrichtung zur Verlangsamung und/oder Ausrichtung des aus dem Auslass 17 der Wirbeldrossel austretenden Wasserstroms.

Es wurde bereits darauf hingewiesen, dass der aus dem Auslass 17 der Wirbeldrossel austretende Wasserstrom bei Austritt aufgrund des Dralls und Drucks konisch austritt, was bedeutet, dass das austretende Wasser im Wesentlichen auf die Außenmantelflächen des Gehäuses 10 ausgerichtet ist. Im Bereich des Auftreffens des aus dem Auslass 17 der Wirbeldrossel austretenden rotierenden Wasserstromes befindet sich ein mit 20 bezeichneter Bürstenkranz, der dafür sorgt, dass das Wasser einerseits verlangsamt wird und andererseits auch durch die Bürsten gerichtet wird, und zwar im Wesentlichen parallel zu der Außenwandung 19 des Gehäuses 10.

Ausgangsseitig (Pfeil 22) an dem Gehäuse 10 befindet sich das insgesamt mit 30 bezeichnete Gatter in Form eines Fischschonrechens mit den Leitelementen 32, die durch ein Gestell in Richtung quer zur Längsachse der Leitelemente verschwenkbar angeordnet sind. Endseitig sind die Leitelemente 32 durch eine Leitstange 35 verbunden, die schlussendlich in Verbindung mit der gelenkigen Anordnung der Leitelemente 32 an dem Gestell 33 zu einer Verschwenkung der Leitelemente führt, wodurch die Ausrichtung der Strömung beinflussbar ist, wenn die Leitstange 35 entsprechend dem Doppelpfeil 36 bewegt wird.

### Bezugszeichenliste:

- 1: Fischpass
- 2: Gerinne
- 10: Vorrichtung
- 12: Gehäuse
- 14: Wirbeldrossel
- 16: Einlass
- 17: Auslass
- 18: Luftzuführung
- 19: Außenwandung
- 20: Bürstenkranz
- 22: Pfeil
- 30: Gatter (Fischschonrechen)
- 32: Leitelement
- 33: Gestell
- 35: Leitstange
- 36: Doppelpfeil

## Patentansprüche

1. Fischaufstiegseinrichtung, insbesondere im Bereich des Auslasses (17) eines Gerinnes eines Fischpasses (1), mit einer Vorrichtung (10) zur Erzeugung einer Dotationsströmung,
**gekennzeichnet durch**
eine in einem Wasserstrom angeordnete Wirbeldrossel (14) mit nachgeordneter Einrichtung zur Verlangsamung und/oder Ausrichtung des aus der Wirbeldrossel (14) austretenden Wasserstroms.

2. Fischaufstiegseinrichtung nach Anspruch 1,
**dadurch gekennzeichnet,**
**dass** die Einrichtung zur Verlangsamung und/oder Ausrichtung des Wasserstroms als Bürstenanordnung ausgebildet ist.

3. Fischaufstiegseinrichtung nach Anspruch 2,
**dadurch gekennzeichnet,**
**dass** die Bürstenanordnung als Bürstenkranz (20) ausgebildet ist.

4. Fischaufstiegseinrichtung nach einem der voranstehenden Ansprüche,
**dadurch gekennzeichnet,**
**dass** die Wirbeldrossel (14) eine Luftzuführung (18) aufweist.

5. Fischaufstiegseinrichtung nach einem der voranstehenden Ansprüche,
**dadurch gekennzeichnet,**
**dass** der Auslass (17) und/oder der Einlass (16) der Wirbeldrossel (14) im Querschnitt veränderbar ist.

6. Fischaufstiegseinrichtung nach einem der voranstehenden Ansprüche,
**dadurch gekennzeichnet,**
**dass** der Einrichtung zur Verlangsamung und/oder Ausrichtung der Strömung eine Einrichtung zur Umlenkung des Wasserstroms nachgeordnet ist.

7. Fischaufstiegseinrichtung nach Anspruch 6,
**dadurch gekennzeichnet,**
**dass** die Einrichtung zur Umlenkung des Wasserstroms als Gatter mit einer Mehrzahl von parallel zueinander verlaufenden Leitelementen (32) ausgebildet ist.

8. Fischaufstiegseinrichtung nach Anspruch 7,
**dadurch gekennzeichnet,**
**dass** die Leitelemente (32) durch ein Gestell (33) aufgenommen sind.

9. Fischaufstiegseinrichtung nach Anspruch 7 oder 8,
**dadurch gekennzeichnet,**
**dass** die Leitelemente (32) in dem Gestell (33) in Richtung quer zur Längsachse der Leitelemente (32) verschwenkbar angeordnet sind.

10. Fischaufstiegseinrichtung nach einem der Ansprüche 7 bis 9,
**dadurch gekennzeichnet,**
**dass** das Gatter entgegen der Strömungsrichtung des Wasserstroms um einen Winkel von bis zu 180° verschwenkbar ist.

11. Fischaufstiegseinrichtung nach einem der voranstehenden Ansprüche,
**dadurch gekennzeichnet,**
**dass** die Vorrichtung (10) zur Erzeugung einer Dotationsströmung in einem Gehäuse (12) angeordnet ist.

## Claims

1. A fish ladder setup, in particular in the area of the outlet (17) of a channel of a fish pass (1), with a device (10) for generating an dotation flow,
**characterized by**
a vortex throttle (14) disposed in a water flow with a downstream assembly for slowing down and/or orienting the water flow exiting the vortex throttle (14).

2. The fish ladder setup according to claim 1,
**characterized in that**
the assembly for slowing down and/or orienting the water flow is formed as a brush arrangement.

3. The fish ladder setup according to claim 2,
**characterized in that**
the brush arrangement is formed as a brush ring (20).

4. The fish ladder setup according to one of the afore-mentioned claims,
**characterized in that**
the vortex throttle (14) comprises an air inlet (18).

5. The fish ladder setup according to one of the afore-mentioned claims,
**characterized in that**
the cross-section of the outlet (17) and/or the inlet (16) of the vortex throttle (14) is modifiable.

6. The fish ladder setup according to one of the afore-mentioned claims,
**characterized in that**
an assembly for deviating the water flow is disposed downstream of the assembly for slowing down and/or orienting the flow.

7. The fish ladder setup according to claim 6,
**characterized in that**
the assembly for deviating the water flow is formed as a grating with a plurality of guiding elements (32) running parallel to one another.

8. The fish ladder setup according to claim 7,
**characterized in that**
the guiding elements (32) are received by a frame (33).

9. The fish ladder setup according to claim 7 or 8,
**characterized in that**
the guiding elements (32) in the frame (33) are disposed so that they can be swiveled in the transverse direction relative to the longitudinal axis of the guiding elements (32).

10. The fish ladder setup according to claim 7 to 9,
**characterized in that**
the grating can be swiveled at an angle of up to 180° against the direction of flow of the water flow.

11. The fish ladder setup according to one of the afore-mentioned claims,
**characterized in that**
the device (10) for generating an dotation flow is disposed in a housing (12).

## Revendications

1. Installation de passe à poissons, en particulier dans la région d'une sortie (17) d'un canal d'une passe à poissons (1) avec un dispositif (10) pour générer un courant attribué,
**caractérisée par**
un étrangleur à tourbillons (14) disposé dans un courant d'eau avec une installation disposée en aval pour ralentir et/ou orienter le courant d'eau sortant de l'étrangleur à tourbillons (14).

2. Installation de passe à poissons selon la revendication 1,
**caractérisée en ce que**
l'installation de ralentissement et/ou d'orientation du courant d'eau prend la forme d'un agencement de brosses.

3. Installation de passe à poissons selon la revendication 2,
**caractérisée en ce que**
l'agencement de brosses prend la forme d'une couronne de brosses (20).

4. Installation de passe à poissons selon l'une des revendications précédentes,
**caractérisée en ce que**
l'étrangleur à tourbillons (14) comporte une alimentation en air (18).

5. Installation de passe à poissons selon l'une des revendications précédentes,
**caractérisée en ce que**
la section transversale de la sortie (17) et/ou de l'entrée (16) de l'étrangleur à tourbillons (14) est modifiable.

6. Installation de passe à poissons selon l'une des revendications précédentes,
**caractérisée en ce que**
une installation de déviation du courant d'eau est disposée en aval de l'installation de ralentissement et/ou d'orientation du courant.

7. Installation de passe à poissons selon la revendication 6,
**caractérisée en ce que**
l'installation de déviation du courant d'eau prend la forme d'une grille avec une pluralité d'éléments de guidage (32) s'étendant parallèlement les uns aux autres.

8. Installation de passe à poissons selon la revendication 7,
**caractérisée en ce que**
les éléments de guidage (32) sont reçus par un châssis (33).

9. Installation de passe à poissons selon la revendication 7 ou 8,
**caractérisée en ce que**
les éléments de guidage (32) sont disposés dans le châssis (33) de manière à pouvoir pivoter dans la direction transversale à l'axe longitudinal des éléments de guidage (32).

10. Installation de passe à poissons selon l'une des revendications 7 à 9,
**caractérisée en ce que**
la grille peut être pivotée selon un angle de jusqu'à 180° à l'encontre de la direction d'écoulement du courant d'eau.

11. Installation de passe à poissons selon l'une des revendications précédentes,
**caractérisée en ce que**
le dispositif (10) de génération d'un courant attribué est disposé dans un boîtier (12).
